(19) Europäisches Patentamt
European Patent Office
Office européen des brevets

(11) **EP 3 581 666 A1**

(12) **EUROPEAN PATENT APPLICATION**

(43) Date of publication:
**18.12.2019 Bulletin 2019/51**

(51) Int Cl.:
***C22B 7/00*** *(2006.01)*    ***C22B 15/00*** *(2006.01)*
***C22B 58/00*** *(2006.01)*

(21) Application number: **18197067.4**

(22) Date of filing: **27.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2018 CN 201810621347**

(71) Applicant: **Hanergy New Material Technology Co.,
Ltd.**
**Yanqi Industrial Development Zone
Huairou District
Beijing 101407 (CN)**

(72) Inventors:
• **TAN, Mingliang**
  **Beijing, 101407 (CN)**
• **LI, Shengchun**
  **Beijing, 101407 (CN)**
• **PAN, Yongjin**
  **Beijing, 101407 (CN)**
• **LIU, Kaihua**
  **Beijing, 101407 (CN)**

(74) Representative: **Nordmeyer, Philipp Werner
df-mp Dörries Frank-Molnia & Pohlman
Patentanwälte Rechtsanwälte PartG mbB
Theatinerstraße 16
80333 München (DE)**

(54) **METHOD FOR RECYCLING COPPER-INDIUM-GALLIUM-SELENIUM WASTE**

(57) A method for recycling copper-indium-gallium-selenium (CIGS) waste is provided, comprising: vacuum distilling the CIGS waste to separate out selenium and obtain a distillation residue; electrolyzing the distillation residue to obtain copper and a remaining electrolyte containing indium and gallium; and separating indium and gallium from the remaining electrolyte containing indium and gallium. The method provides a novel route for recycling CIGS waste, the process is simple, and the environmental pollution caused by CIGS waste is decreased. Further, the residual raffinate can be reused in electrolyzing of the distillation residue as a copper sulfate electrolyte by adding appropriate amount of copper sulfate and sulfuric acid therein, such that the circulation of the copper sulfate electrolyte forms a closed cycle and the discharge of wastewater and pollution to the environment are reduced.

FIG. 1

EP 3 581 666 A1

## Description

### Cross-Reference to Related Applications

The present application is based on and claims the priority of Chinese Patent Application No. 201810621347.6, filed on June 15, 2018, which is incorporated herein by reference in its entirety.

### Technical Field

The present disclosure relates to the field of recycling metallic and non-metallic waste. Particularly, the present disclosure relates to a method for recycling copper-indium-gallium-selenium (CIGS) waste.

### Background Art

Copper-indium-gallium-selenium (CIGS) thin-film solar cell is an efficient and convenient solar cell. Compared with the crystalline silicon solar cell currently available on the market, the CIGS thin-film solar cell has advantages of good flexibility, high conversion rate, a wide variety of applications and the like, and therefore will become the mainstream in the development of photovoltaic industry in the future. During the process of fabricating the CIGS solar cell, a large amount of waste will be generated. Such waste contains little impurities other than copper, indium, gallium and selenium, and the recycling value thereof is great. Current methods for recycling the waste include an electrolysis process, a sulfating and roasting process, an acid dissolution process, and so on.

In the prior art, CIGS waste may be employed as an anode and electrolyzed in an alkaline electrolyte to recover gallium and convert indium into a hydroxide which enters the anode mud together with copper and selenium. Then, indium is recovered by hydrochloric acid leaching, while copper and selenium are recovered by nitric acid leaching. Alternatively, the CIGS waste is subjected to a sulfating and roasting process to separate selenium, followed by water leaching of all the other three elements, copper, indium and gallium, from the roasted residue into a solution. Then, copper, indium and gallium are separated by extraction and chemical precipitation processes. The CIGS waste may also be recycled by leaching with sulfuric acid plus hydrogen peroxide, followed by reducing with sulfur dioxide to separate selenium, copper-ammonia complexation to separate copper, and precipitating with alkali to separate indium. It can be seen that the processes of recycling CIGS waste disclosed in the prior art involve chemical leaching. The problem related to chemical leaching is that more wastewater and environmental pollution may be caused.

### Summary of Invention

In order to solve or at least partially solve the aforesaid problem, the present disclosure provides a method for recycling CIGS waste, comprising the following steps:

> vacuum distilling the CIGS waste to separate out selenium and obtain a distillation residue;
> electrolyzing the distillation residue to obtain copper and a remaining electrolyte containing indium and gallium; and
> separating indium and gallium from the remaining electrolyte containing indium and gallium.

In an embodiment of the present invention, the step of electrolyzing the distillation residue to obtain copper and a remaining electrolyte containing indium and gallium comprises electrolyzing the distillation residue in a copper sulfate electrolyte, with the distillation residue as an anode and a stainless steel plate as a cathode, to precipitate copper on the cathode and obtain a remaining electrolyte containing indium and gallium.

In an embodiment of the present invention, the step of separating indium and gallium from the remaining electrolyte containing indium and gallium comprises the following operations:

> extracting the remaining electrolyte containing indium and gallium with a first extractant to obtain indium and a first raffinate; and
> extracting the first raffinate with a second extractant to obtain gallium and a second raffinate.

In an embodiment of the present invention, the method further comprises adding copper sulfate (either crystalline or amorphous copper sulfate) and sulfuric acid into the second raffinate to prepare a copper sulfate electrolyte for electrolyzing the distillation residue.

In an embodiment of the present invention, the operation of extracting the remaining electrolyte containing indium and gallium with a first extractant to obtain indium and a first raffinate comprises:

extracting the remaining electrolyte containing indium and gallium with the first extractant to yield an indium-extracting phase and a first raffinate;

stripping the indium-extracting phase to yield an indium-stripping phase; and

electrodepositing the indium-stripping phase to obtain indium.

In an embodiment of the present invention, the operation of extracting the remaining electrolyte containing indium and gallium with a first extractant to obtain indium and a first raffinate further comprises adjusting the pH of the remaining electrolyte containing indium and gallium to 1 or less, before extracting according the remaining electrolyte with the first extractant.

In an embodiment of the present invention, the operation of extracting the first raffinate with a second extractant to obtain gallium and a second raffinate comprises:

extracting the first raffinate with the second extractant to yield a gallium-extracting phase and a second raffinate;

stripping the gallium-extracting phase to yield a gallium-stripping phase; and

electrodepositing the gallium-stripping phase to obtain gallium.

In an embodiment of the present invention, the operation of extracting the first raffinate with a second extractant to obtain gallium and a second raffinate further comprises adjusting the pH of the first raffinate to a value in the range of 2 to 3, before extracting the first raffinate with the second extractant.

In an embodiment of the present invention, the step of vacuum distilling the CIGS waste to separate out selenium and obtain a distillation residue comprises vacuum distilling the CIGS waste under preset distillation conditions to separate out selenium and obtain a distillation residue, wherein the preset distillation conditions include a vacuum of 5 to 30 Pa, a distillation temperature of 400 to 600°C, and a distillation period of 2 to 3 hours.

In an embodiment of the present invention, the step of electrolyzing the distillation residue to obtain copper and a remaining electrolyte containing indium and gallium comprises electrolyzing the distillation residue under preset electrolysis conditions to obtain copper and a remaining electrolyte containing indium and gallium, wherein the preset electrolysis conditions include a voltage of 0.3 to 0.5 V, an electrolysis temperature of 30 to 60°C, and a current density of 200 to 400 A/m$^2$.

In an embodiment of the present invention, the first extractant includes diisooctyl phosphate (also known as di(2-ethylhexyl) phosphate) extractant (P204).

In an embodiment of the present invention, the second extractant includes a hydroxamic acid type chelating extractant, such as *neo*-tridecyl hydroxamic acid (H106).

The advantages of the methods according to the present disclosure include that a novel route for recycling CIGS waste is provided, the process is simple, and the environmental pollution caused by CIGS waste is decreased. Further the residual raffinate can be reused in electrolyzing of the distillation residue as a copper sulfate electrolyte by adding appropriate amount of copper sulfate and sulfuric acid therein, such that the circulation of the copper sulfate electrolyte forms a closed cycle and the discharge of wastewater and pollution to the environment are reduced.

## Brief Description of the Drawing

In order to illustrate the technical solutions of the present disclosure more clearly, the drawings referenced in the detailed description below will be briefly described. It is apparent that the drawings in the following description are merely an example of the embodiments according to the present disclosure, and the disclosure is not limited thereto.

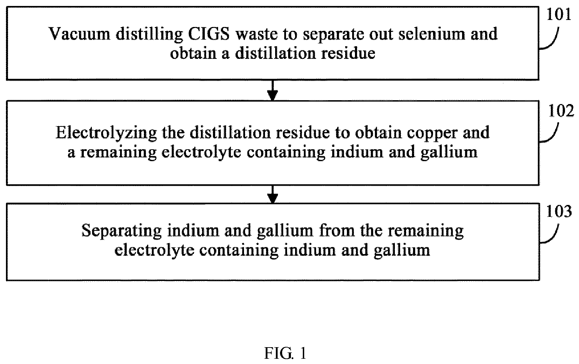

FIG. 1 is a flow chart of the method for recycling CIGS waste according to an embodiment of the present disclosure.

## Detailed Description of Certain Embodiments

Hereinafter, the present disclosure will be described in further detail with reference to the drawings and specific embodiments to make the aforesaid objects, features and advantages of the disclosure become more apparent.

FIG. 1 is a flow chart of a method for recycling CIGS waste according to an embodiment of the present disclosure, the method comprising steps 101, 102 and 103.

In the step 101, the CIGS waste is distilled under vacuum to separate out selenium and give a distillation residue.

For example, the CIGS waste may be placed in a vacuum oven and distilled to separate out selenium upon condensation through a condenser, while leaving a distillation residue. Specifically, selenium has a boiling point much lower than the other three elements, copper, indium and gallium. Therefore, vacuum distillation can be used to separate selenium, and the process is highly efficient and environment-friendly.

In a particular embodiment of the present disclosure, the CIGS waste may be placed in a vacuum oven and distilled under preset distillation conditions to separate out selenium and give a distillation residue. The preset distillation conditions include a vacuum of 5 to 30 Pa, a distillation temperature of 400 to 600°C, and a distillation period of 2 to 3 hours.

In the step 102, the distillation residue is electrolyzed to give copper and a remaining electrolyte containing indium and gallium.

For example, the distillation residue may be electrolyzed in an electrolytic tank. The electrolysis may be performed with the distillation residue as an anode and a stainless steel plate as a cathode, in the presence of a copper sulfate electrolyte, to give copper and a remaining electrolyte containing indium and gallium. The copper sulfate electrolyte is acidic. Generally, the $Cu^{2+}$ concentration of the electrolyte is in the range of 40 to 80 g/L, and the sulfuric acid concentration of the electrolyte is in the range of 100 to 180 g/L. The distillation residue may be electrolyzed in an electrolytic tank under preset electrolysis conditions which include a voltage of 0.3 to 0.5 V, an electrolysis temperature of 30 to 60°C, and a current density of 200 to 400 A/m$^2$.

In the step 102, the reaction principle of the electrolysis of the distillation residue is as follows:

[Anode]

$$Cu - 2e^- \rightarrow Cu^{2+}$$

$$In - 3e^- \rightarrow In^{3+}$$

$$Ga - 3e^- \rightarrow Ga^{3+}$$

[Cathode] There are three cations in the electrolyte, $Cu^{2+}$, $In^{3+}$ and $Ga^{3+}$, among which $Cu^{2+}$ will precipitate first on the cathode stainless steel plate:

$$Cu^{2+} + 2e^- \rightarrow Cu$$

According to the embodiments of the present disclosure, a vacuum distillation technique is combined with an electrolysis technique to establish a process capable of separating and recovering selenium and copper in high efficiency. The process is simple and the productivity is improved.

In the step 103, indium and gallium are separated from the remaining electrolyte containing indium and gallium.

For example, the separation of indium and gallium may be performed in two steps. Firstly, the remaining electrolyte containing indium and gallium is extracted with a first extractant to give indium and a first raffinate. Secondly, the first raffinate is extracted with a second extractant to give gallium and a second raffinate.

In an embodiment of the present invention, the operation of extracting the remaining electrolyte containing indium and gallium with a first extractant to obtain indium and a first raffinate comprises: extracting the remaining electrolyte containing indium and gallium with the first extractant to yield an indium-extracting phase and a first raffinate; stripping the indium-extracting phase to yield an indium-stripping phase; and electrodepositing the indium-stripping phase to obtain indium. The operation may further comprise adjusting the pH of the remaining electrolyte containing indium and gallium, e.g., to 1 or less, before extracting the remaining electrolyte with the first extractant, so as to achieve a higher extraction efficiency.

In an embodiment of the present invention, the reaction principle of recovering indium by electrodeposition is as follows:

[Anode]

$$4OH^- - 4e^- \rightarrow 2H_2O + O_2\uparrow$$

[Cathode]

$$In^{3+} + 3e^- \rightarrow In$$

It is noted that many extractants may be used as the first extractant, and examples thereof include, but are not limited to, diisooctyl phosphate extractant, such as the diisooctyl phosphate extractant P204, available from Chongqing Kangpu Chemical Industry Co., Ltd., China. Also, many stripping agents may be used as a first stripping agent for stripping the indium-extracting phase, and examples thereof include, but are not limited to, hydrochloric acid, such as 2 to 6 mol/L hydrochloric acid solution (e.g., 2, 3, 4, 5 or 6 mol/L hydrochloric acid solution). The conditions of extraction, stripping and electrodeposition described above with regard to indium recovery may be determined according to practical applications, and are not particularly limited in the present disclosure.

In an embodiment of the present invention, the operation of extracting the first raffinate with a second extractant to obtain gallium and a second raffinate comprises: extracting the first raffinate with the second extractant to yield a gallium-extracting phase and a second raffinate; stripping the gallium-extracting phase to yield a gallium-stripping phase; and electrodepositing the gallium-stripping phase to obtain gallium. The operation may further comprise adjusting the pH of the first raffinate, e.g., to a value in the range of 2 to 3, before extracting the first raffinate with the second extractant, so as to achieve a higher extraction efficiency.

In an embodiment of the present invention, the reaction principle of recovering gallium by electrodeposition is as follows:

[Anode]

$$4OH^- - 4e^- \rightarrow 2H_2O + O_2\uparrow$$

[Cathode]

$$Ga^{3+} + 3e^- \rightarrow Ga$$

It is noted that many extractants may be used as the second extractant, and examples thereof include, but are not limited to, hydroxamic acid type chelating extractants, such as the *neo*-tridecyl hydroxamic acid extractant H106, available from Chongqing Kangpu Chemical Industry Co., Ltd., China. Also, many stripping agents may be used as a second stripping agent for stripping the gallium-extracting phase, and examples thereof include, but are not limited to, aqueous oxalic acid solution, such as 0.5 to 2 mol/L oxalic acid solution (e.g., 0.5, 0.7, 1, 1.5 or 2 mol/L oxalic acid solution). The conditions of extraction, stripping and electrodeposition described above with regard to gallium recovery may be determined according to practical applications, and are not particularly limited in the present disclosure.

In an embodiment of the present invention, the method further comprises adding copper sulfate (e.g., copper sulfate crystal) and sulfuric acid into the second raffinate to prepare a copper sulfate electrolyte, which may be recycled to the electrolytic tank used in the step 102 for electrolyzing the distillation residue. Generally, the $Cu^{2+}$ concentration of the copper sulfate electrolyte is in the range of 40 to 80 g/L, and the sulfuric acid concentration of the electrolyte is in the range of 100 to 180 g/L.

By adding appropriate amount of copper sulfate and sulfuric acid to the second raffinate after the extraction and separation of indium and gallium, a copper sulfate electrolyte is prepared for use in electrolyzing of the distillation residue to obtain copper, such that the circulation of the copper sulfate electrolyte can form a closed cycle and the discharge of wastewater can be reduced.

In the methods according to the present disclosure, selenium is recovered by vacuum distilling CIGS waste, leaving a distillation residue; copper is recovered by electrolyzing the distillation residue, leaving a remaining electrolyte containing indium and gallium; then, indium and gallium are recovered by separating the remaining electrolyte containing indium and gallium. The present disclosure provides a novel route for recycling CIGS waste, the process is simple, and the environmental pollution caused by CIGS waste is decreased. Further, the residual raffinate can be reused in electrolyzing of the distillation residue as a copper sulfate electrolyte by adding appropriate amount of copper sulfate and sulfuric acid therein, such that the circulation of the copper sulfate electrolyte forms a closed cycle and the discharge of wastewater and pollution to the environment are reduced.

The method for recycling of CIGS waste according to the present disclosure will be illustrated by the following examples so that those of ordinary skill in the art may better understand the disclosure.

## Examples

The CIGS waste used in the examples was a powder waste generated in the process of producing CIGS thin-film solar chip by magnetron sputtering, and comprising (by weight percent) 20% Cu, 18% In, 10% Ga, 50% Se, and 2% of other impurity elements. The extractants P204 and H106 used in the examples were available from Chongqing Kangpu Chemical Industry Co., Ltd., China. The respective hydrochloric acid solutions and oxalic acid solutions used in the examples were prepared with water as solvent. Purities were measured by Inductively Coupled Plasma Spectrometer (ICP). Recovery rates were calculated by the following formula:

$$(\text{Mass of recovered element} \times \text{Purity of the element}) / (\text{Mass of CIGS}$$

$$\text{waste} \times \text{Mass fraction of the element in the waste}) \times 100\%.$$

Example 1

The CIGS waste was placed in a vacuum oven and distilled to separate out selenium upon condensation through a condenser, while leaving a distillation residue. The distillation was performed under the following conditions: vacuum degree in the oven, 5 Pa; distillation temperature, 400°C; distillation period, 2 hours. The purity of recovered selenium powder was above 99.9%, and the recovery rate thereof was above 99%.

The distillation residue was employed as an anode and electrolyzed in an electrolytic tank containing a copper sulfate electrolyte and provided with a stainless steel plate as a cathode, so as to dissolve the distillation residue into the copper sulfate electrolyte and precipitate copper on the cathode, while leaving a remaining electrolyte containing indium and gallium. The electrolysis was performed under the following conditions: voltage applied to the electrolytic tank, 0.3 V; electrolysis temperature, 30°C; current density, 200 A/m$^2$. The purity of recovered copper was above 99.99%.

The remaining electrolyte containing indium and gallium was adjusted to pH 0.01 and extracted with the extractant P204 to yield an indium-extracting phase and a first raffinate. The indium-extracting phase was stripped with 3 mol/L hydrochloric acid solution to yield an indium-stripping phase. Then, the indium-stripping phase was electrodeposited to recover indium. The purity of recovered indium was above 99.99%, and the recovery rate thereof was above 97%.

The first raffinate was adjusted to pH 2 and extracted with the extractant H106 to yield a gallium-extracting phase and a second raffinate. The gallium-extracting phase was stripped with 0.5 mol/L oxalic acid solution to yield a gallium-stripping phase. Then, the gallium-stripping phase was electrodeposited to recover gallium. The purity of recovered gallium was above 99.99%, and the recovery rate thereof was above 97%.

Copper sulfate crystal and sulfuric acid were added into the second raffinate to prepare a copper sulfate electrolyte comprising 40 g/L Cu$^{2+}$ and 160g/L sulfuric acid. The copper sulfate electrolyte prepared from the second raffinate with the addition of copper sulfate crystal and sulfuric acid was supplied and recycled to the above electrolytic tank.

Example 2

The CIGS waste was placed in a vacuum oven and distilled to separate out selenium upon condensation through a condenser, while leaving a distillation residue. The distillation was performed under the following conditions: vacuum degree in the oven, 30 Pa; distillation temperature, 600°C; distillation period, 3 hours. The purity of recovered selenium powder was above 99.9%, and the recovery rate thereof was above 98%.

The distillation residue was employed as an anode and electrolyzed in an electrolytic tank containing a copper sulfate electrolyte and provided with a stainless steel plate as a cathode, so as to dissolve the distillation residue into the copper sulfate electrolyte and precipitate copper on the cathode, while leaving a remaining electrolyte containing indium and gallium. The electrolysis was performed under the following conditions: voltage applied to the electrolytic tank, 0.5 V; electrolysis temperature, 60°C; current density, 400 A/m$^2$. The purity of recovered copper was above 99.99%.

The remaining electrolyte containing indium and gallium was adjusted to pH 1 and extracted with the extractant P204 to yield an indium-extracting phase and a first raffinate. The indium-extracting phase was stripped with 3 mol/L hydrochloric acid solution to yield an indium-stripping phase. Then, the indium-stripping phase was electrodeposited to recover indium. The purity of recovered indium was above 99.99%, and the recovery rate thereof was above 99%.

The first raffinate was adjusted to pH 3 and extracted with the extractant H106 to yield a gallium-extracting phase and a second raffinate. The gallium-extracting phase was stripped with 0.7 mol/L oxalic acid solution to yield a gallium-stripping phase. Then, the gallium-stripping phase was electrodeposited to recover gallium. The purity of recovered gallium was above 99.99%, and the recovery rate thereof was above 96%.

Copper sulfate crystal and sulfuric acid were added into the second raffinate to prepare a copper sulfate electrolyte comprising 50 g/L Cu$^{2+}$ and 180 g/L sulfuric acid. The copper sulfate electrolyte prepared from the second raffinate with the addition of copper sulfate crystal and sulfuric acid was supplied and recycled to the above electrolytic tank.

Example 3

The CIGS waste was placed in a vacuum oven and distilled to separate out selenium upon condensation through a condenser, while leaving a distillation residue. The distillation was performed under the following conditions: vacuum degree in the oven, 10 Pa; distillation temperature, 450°C; distillation period, 2.3 hours. The purity of recovered selenium powder was above 99.9%, and the recovery rate thereof was above 99%.

The distillation residue was employed as an anode and electrolyzed in an electrolytic tank containing a copper sulfate electrolyte and provided with a stainless steel plate as a cathode, so as to dissolve the distillation residue into the copper sulfate electrolyte and precipitate copper on the cathode, while leaving a remaining electrolyte containing indium and gallium. The electrolysis was performed under the following conditions: voltage applied to the electrolytic tank, 0.35 V; electrolysis temperature, 35°C; current density, 250 A/m$^2$. The purity of recovered copper was above 99.99%.

The remaining electrolyte containing indium and gallium was adjusted to pH 0.2 and extracted with the extractant P204 to yield an indium-extracting phase and a first raffinate. The indium-extracting phase was stripped with 4 mol/L hydrochloric acid solution to yield an indium-stripping phase. Then, the indium-stripping phase was electrodeposited to recover indium. The purity of recovered indium was above 99.99%, and the recovery rate thereof was above 97%.

The first raffinate was adjusted to pH 2.5 and extracted with the extractant H106 to yield a gallium-extracting phase and a second raffinate. The gallium-extracting phase was stripped with 0.7 mol/L oxalic acid solution to yield a gallium-stripping phase. Then, the gallium-stripping phase was electrodeposited to recover gallium. The purity of recovered gallium was above 99.99%, and the recovery rate thereof was above 99%.

Copper sulfate crystal and sulfuric acid were added into the second raffinate to prepare a copper sulfate electrolyte comprising 42 g/L Cu$^{2+}$ and 165 g/L sulfuric acid. The copper sulfate electrolyte prepared from the second raffinate with the addition of copper sulfate crystal and sulfuric acid was supplied and recycled to the above electrolytic tank.

Example 4

The CIGS waste was placed in a vacuum oven and distilled to separate out selenium upon condensation through a condenser, while leaving a distillation residue. The distillation was performed under the following conditions: vacuum degree in the oven, 15 Pa; distillation temperature, 500°C; distillation period, 2.5 hours. The purity of recovered selenium powder was above 99.9%, and the recovery rate thereof was above 98%.

The distillation residue was employed as an anode and electrolyzed in an electrolytic tank containing a copper sulfate electrolyte and provided with a stainless steel plate as a cathode, so as to dissolve the distillation residue into the copper sulfate electrolyte and precipitate copper on the cathode, while leaving a remaining electrolyte containing indium and gallium. The electrolysis was performed under the following conditions: voltage applied to the electrolytic tank, 0.4 V; electrolysis temperature, 45°C; current density, 300 A/m$^2$. The purity of recovered copper was above 99.99%.

The remaining electrolyte containing indium and gallium was adjusted to pH 0.5 and extracted with the extractant P204 to yield an indium-extracting phase and a first raffinate. The indium-extracting phase was stripped with 5 mol/L hydrochloric acid solution to yield an indium-stripping phase. Then, the indium-stripping phase was electrodeposited to recover indium. The purity of recovered indium was above 99.99%, and the recovery rate thereof was above 96%.

The first raffinate was adjusted to pH 2.7 and extracted with the extractant H106 to yield a gallium-extracting phase and a second raffinate. The gallium-extracting phase was stripped with 1 mol/L oxalic acid solution to yield a gallium-stripping phase. Then, the gallium-stripping phase was electrodeposited to recover gallium. The purity of recovered gallium was above 99.99%, and the recovery rate thereof was above 97%.

Copper sulfate crystal and sulfuric acid were added into the second raffinate to prepare a copper sulfate electrolyte comprising 45 g/L Cu$^{2+}$ and 170 g/L sulfuric acid. The copper sulfate electrolyte prepared from the second raffinate with the addition of copper sulfate crystal and sulfuric acid was supplied and recycled to the above electrolytic tank.

Example 5

The CIGS waste was placed in a vacuum oven and distilled to separate out selenium upon condensation through a condenser, while leaving a distillation residue. The distillation was performed under the following conditions: vacuum degree in the oven, 25 Pa; distillation temperature, 550°C; distillation period, 2.8 hours. The purity of recovered selenium powder was above 99.9%, and the recovery rate thereof was above 96%.

The distillation residue was employed as an anode and electrolyzed in an electrolytic tank containing a copper sulfate electrolyte and provided with a stainless steel plate as a cathode, so as to dissolve the distillation residue into the copper sulfate electrolyte and precipitate copper on the cathode, while leaving a remaining electrolyte containing indium and gallium. The electrolysis was performed under the following conditions: voltage applied to the electrolytic tank, 0.45 V; electrolysis temperature, 55°C; current density, 350 A/m$^2$. The purity of recovered copper was above 99.99%.

The remaining electrolyte containing indium and gallium was adjusted to pH 0.8 and extracted with the extractant P204 to yield an indium-extracting phase and a first raffinate. The indium-extracting phase was stripped with 6 mol/L hydrochloric acid solution to yield an indium-stripping phase. Then, the indium-stripping phase was electrodeposited to recover indium. The purity of recovered indium was above 99.99%, and the recovery rate thereof was above 98%.

The first raffinate was adjusted to pH 2.8 and extracted with the extractant H106 to yield a gallium-extracting phase and a second raffinate. The gallium-extracting phase was stripped with 1.5 mol/L oxalic acid solution to yield a gallium-stripping phase. Then, the gallium-stripping phase was electrodeposited to recover gallium. The purity of recovered gallium was above 99.99%, and the recovery rate thereof was above 98%.

Copper sulfate crystal and sulfuric acid were added into the second raffinate to prepare a copper sulfate electrolyte comprising 48 g/L $Cu^{2+}$ and 175g/L sulfuric acid. The copper sulfate electrolyte prepared from the second raffinate with the addition of copper sulfate crystal and sulfuric acid was supplied and recycled to the above electrolytic tank.

The above examples demonstrate that copper, indium, gallium and selenium can be efficiently separated and recovered from CIGS waste by the methods according to the present disclosure. The purities of recovered copper, indium and gallium are respectively higher than 99.99%, the purity of recovered selenium is higher than 99.9%, and the recovery rates thereof are respectively higher than 96%, or even higher than 97%, 98% or 99%.

Although some preferred embodiments according to the present disclosure have been described, those of ordinary skill in the art may make additional changes and modifications to the embodiments without departing from the spirit and essence of the present invention. Accordingly, the appended claims are intended to be interpreted as encompassing the preferred embodiments and all the changes and modifications within the scope of the present disclosure.

Furthermore, it is noted that the relational terms such as "first" and "second" herein are used merely to distinguish one entity or operation from another, and do not necessarily require or imply that there is really any such relationship or order between these entities or operations. The term "comprises", "comprising", "includes", "including" or any other variants thereof is intended to encompass non-exclusive inclusions, such that a process, method, article, or device comprising a plurality of elements includes not only those elements, but also other elements that are not clearly listed or elements that are inherent to the process, method, article, or device. An element following the phrase "comprising a/an ..." does not exclude the presence of additional equivalent element(s) in the process, method, article, or device comprising the element, unless specifically defined otherwise. In addition, the recitation of numerical ranges by endpoints includes all subsets and numbers subsumed within that range. For example, a pressure range of 5 to 30 Pa is an abbreviation, and specifically includes all values from 5 Pa to 30 Pa, e.g., 5, 10, 20, 22, 30, 10-20 Pa, etc. The technical features of various aspects and various embodiments of the present disclosure may be combined with each other.

The methods for recycling of CIGS waste provided by the present disclosure have been described above in detail, and the principles and embodiments of the disclosure are explained with reference to specific examples. The above description of the embodiments and examples is provided for the purpose to facilitate understanding of the methods and spirits of the present disclosure. Those of ordinary skill in the art may make various changes to the embodiments and implementations in accordance with the spirits of the present disclosure. Accordingly, the contents of the description are not to be construed as limiting the scope of the present disclosure.

**Claims**

1. A method for recycling copper-indium-gallium-selenium (CIGS) waste, comprising the following steps:

   vacuum distilling the CIGS waste to separate out selenium and obtain a distillation residue;
   electrolyzing the distillation residue to obtain copper and a remaining electrolyte containing indium and gallium; and
   separating indium and gallium from the remaining electrolyte containing indium and gallium.

2. The method for recycling CIGS waste according to claim 1, wherein the step of electrolyzing the distillation residue to obtain copper and a remaining electrolyte containing indium and gallium comprises:
   electrolyzing the distillation residue in a copper sulfate electrolyte, with the distillation residue as an anode and a stainless steel plate as a cathode, to precipitate copper on the cathode and obtain a remaining electrolyte containing indium and gallium.

3. The method for recycling CIGS waste according to claim 1 or 2, wherein the step of separating indium and gallium from the remaining electrolyte containing indium and gallium comprises the following operations:

   extracting the remaining electrolyte containing indium and gallium with a first extractant to obtain indium and a first raffinate; and
   extracting the first raffinate with a second extractant to obtain gallium and a second raffinate.

4. The method for recycling CIGS waste according to claim 3, further comprising:

adding copper sulfate and sulfuric acid into the second raffinate to prepare a copper sulfate electrolyte for electrolyzing the distillation residue.

5. The method for recycling CIGS waste according to claim 3, wherein the operation of extracting the remaining electrolyte containing indium and gallium with a first extractant to obtain indium and a first raffinate comprises:

   extracting the remaining electrolyte containing indium and gallium with the first extractant to yield an indium-extracting phase and a first raffinate;
   stripping the indium-extracting phase to yield an indium-stripping phase; and
   electrodepositing the indium-stripping phase to obtain indium.

6. The method for recycling CIGS waste according to claim 5, wherein the operation of extracting the remaining electrolyte containing indium and gallium with a first extractant to obtain indium and a first raffinate further comprises: adjusting the pH of the remaining electrolyte containing indium and gallium to 1 or less, before extracting the remaining electrolyte with the first extractant.

7. The method for recycling CIGS waste according to claim 3, wherein the operation of extracting the first raffinate with a second extractant to obtain gallium and a second raffinate comprises:

   extracting the first raffinate with the second extractant to yield a gallium-extracting phase and a second raffinate;
   stripping the gallium-extracting phase to yield a gallium-stripping phase; and
   electrodepositing the gallium-stripping phase to obtain gallium.

8. The method for recycling CIGS waste according to claim 7, wherein the operation of extracting the first raffinate with a second extractant to obtain gallium and a second raffinate further comprises: adjusting the pH of the first raffinate to a value in the range of 2 to 3, before extracting the first raffinate with the second extractant.

9. The method for recycling CIGS waste according to claim 1 or 2, wherein the step of vacuum distilling the CIGS waste to separate out selenium and obtain a distillation residue comprises: vacuum distilling the CIGS waste to separate out selenium and obtain a distillation residue, under preset distillation conditions including a vacuum of 5 to 30 Pa, a distillation temperature of 400 to 600°C, and a distillation period of 2 to 3 hours.

10. The method for recycling CIGS waste according to claim 1 or 2, wherein the step of electrolyzing the distillation residue to obtain copper and a remaining electrolyte containing indium and gallium comprises: electrolyzing the distillation residue to obtain copper and a remaining electrolyte containing indium and gallium, under preset electrolysis conditions including a voltage of 0.3 to 0.5 V, an electrolysis temperature of 30 to 60°C, and a current density of 200 to 400 A/m$^2$.

11. The method for recycling CIGS waste according to claim 3, wherein the first extractant includes diisooctyl phosphate extractant.

12. The method for recycling CIGS waste according to claim 3, wherein the second extractant includes hydroxamic acid type chelating extractants.

Vacuum distilling CIGS waste to separate out selenium and obtain a distillation residue
101

Electrolyzing the distillation residue to obtain copper and a remaining electrolyte containing indium and gallium
102

Separating indium and gallium from the remaining electrolyte containing indium and gallium
103

FIG. 1

Europäisches
Patentamt

European
Patent Office

Office européen
des brevets

## EUROPEAN SEARCH REPORT

Application Number

EP 18 19 7067

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANNA M. K. GUSTAFSSON ET AL: "Investigation on an Electrochemical Method for Separation of Copper, Indium and Gallium from Pretreated CIGS Soalr Cell Waste Material", THE SCIENTIFIC WORLD JOURNAL, vol. 2015, 2015, pages 1-11, XP002789029, | 1,3-12 | INV. C22B7/00 C22B15/00 C22B58/00 |
| A | * the whole document * | 2 | |
| Y | JIN SHIPING ET AL: "Selenium Removal by Vacuum Distillation", ZHENKONG-KEXUE-YU-JISHU-XUEBAO = CHINESE JOURNAL OF VACUUM SCIENCE AND TECHNOLOGY, BEIJING, 2004- ZHONGGUO ZHENKONG XUEHUI, CN , vol. 2003-05, no. 5 1 May 2003 (2003-05-01), pages 369-372, XP009508850, ISSN: 1672-7126 Retrieved from the Internet: URL:http://en.cnki.com.cn/Article_en/CJFDT OTAL-ZKKX200305019.htm [retrieved on 2019-02-16] | 1,3-12 | |
| A | * the whole document * | 2 | |
| A | WO 2017/124890 A1 (HANERGY NEW MAT TECH CO LTD [CN]) 27 July 2017 (2017-07-27) * the whole document * | 1-12 | |

-----

-----

-----

-/--

TECHNICAL FIELDS
SEARCHED (IPC)

C22B

The present search report has been drawn up for all claims

| Place of search | Date of completion of the search | Examiner |
|---|---|---|
| Munich | 20 February 2019 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 19 7067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUSTAFSSON ANNA M K ET AL: "Recycling of high purity selenium from CIGS solar cell waste materials", WASTE MANAGEMENT, ELSEVIER, NEW YORK, NY, US, vol. 34, no. 10, 25 January 2014 (2014-01-25), pages 1775-1782, XP029054114, ISSN: 0956-053X, DOI: 10.1016/J.WASMAN.2013.12.021 * the whole document * | 1-12 | |
| A | WOLFRAM PALITZSCH ET AL: "Results from scaling up the new universal chemical recycling procedure for CIS, CIGS and CdTe photovoltaic waste", PHOTOVOLTAIC SPECIALISTS CONFERENCE (PVSC), 2011 37TH IEEE, IEEE, 19 June 2011 (2011-06-19), pages 2022-2024, XP032168094, DOI: 10.1109/PVSC.2011.6186350 ISBN: 978-1-4244-9966-3 * the whole document * | 1-12 | |

TECHNICAL FIELDS
SEARCHED      (IPC)

The present search report has been drawn up for all claims

| Place of search | Date of completion of the search | Examiner |
|---|---|---|
| Munich | 20 February 2019 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 18 19 7067

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2019

| Patent document cited in search report | Publication date | Patent family member(s) | Publication date |
|---|---|---|---|
| WO 2017124890 A1 | 27-07-2017 | AU 2016388065 A1 | 09-08-2018 |
| | | CA 3011905 A1 | 27-07-2017 |
| | | CN 106987720 A | 28-07-2017 |
| | | EP 3382044 A1 | 03-10-2018 |
| | | KR 20180095931 A | 28-08-2018 |
| | | SG 11201806234Q A | 30-08-2018 |
| | | WO 2017124890 A1 | 27-07-2017 |

EPO FORM P0459

For more details about this annex : see Official Journal of the European Patent Office, No. 12/82

**REFERENCES CITED IN THE DESCRIPTION**

**Patent documents cited in the description**

- CN 201810621347